# EUROPÄISCHE PATENTSCHRIFT

(11) **EP 3 895 265 B1**
(45) Veröffentlichungstag und Bekanntmachung des Hinweises auf die Patenterteilung: **08.01.2025**
(21) Anmeldenummer: 19809805.5
(22) Anmeldetag: 26.11.2019
(51) Int. Cl.: H01T 13/41

(54) **ZÜNDKERZENWIDERSTANDSELEMENT UND ZÜNDKERZE**
SPARK PLUG RESISTANCE ELEMENT AND SPARK PLUG
ÉLÉMENT DE RÉSISTANCE POUR BOUGIE D'ALLUMAGE ET BOUGIE D'ALLUMAGE

(30) Priorität: 13.12.2018 DE 102018221690
(43) Veröffentlichungstag der Anmeldung: 20.10.2021
(73) Patentinhaber: Robert Bosch GmbH, 70442 Stuttgart (DE)
(72) Erfinder: KASJANOW, Helene, 70469 Stuttgart (DE); REINSCH, Benedikt, 72585 Riederich (DE); VONAU, Corinna, 70469 Stuttgart (DE); NUFER, Stefan, 70565 Stuttgart (DE); BRAUN, Hubertus, 71272 Renningen (DE); KUENZEL, Carsten, 71732 Tamm (DE)
(86) Internationale Anmeldenummer: PCT/EP2019/082534
(87) Internationale Veröffentlichungsnummer: WO 2020/120121

(56) Entgegenhaltungen:
- EP-A1- 1 648 062
- EP-A1- 2 940 811
- WO-A1-2011/030845
- JP-A- H02 239 582
- US-A- 3 915 721

## Beschreibung

### Stand der Technik

Die vorliegende Erfindung betrifft ein Zündkerzenwiderstandselement und eine Zündkerze mit verbesserter elektromagnetischer Kompatibilität, also elektromagnetische Verträglichkeit (EMV).

Zündkerzen, die in einer Verbrennungskammer einer Brennkraftmaschine angeordnet sind, weisen, um die elektromagnetische Verträglichkeit der Zündkerzen zu verbessern, einen spezifischen elektrischen Widerstand von 1 bis 14 kΩ auf. Typischerweise wird hierbei ein Widerstandselement verwendet, das sich anschlussseitig an einen Fuß einer Mittelelektrode anschließt, und das aus einem keramischen Material, genauer gesagt aus einem Glas, besteht. Diese herkömmlichen Widerstandselemente zeigen jedoch, über die Lebensdauer der Zündkerze gesehen, keine ausreichende elektrische Stabilität auf.

Aus der EP 2 940 811 A1, der US 3 915 721 A1, der EP 1 648 062 A1 und der WO 2011/030845 A1 sind Zündkerzenwiderstandselemente bekannt.

### Offenbarung der Erfindung

Das erfindungsgemäße Zündkerzenwiderstandselement zeichnet sich hingegen durch eine niedrigere Abstrahlung von elektromagnetischer Strahlung und damit durch eine höhere elektromagnetische Verträglichkeit bei gleichbleibend guter elektrischer Isolierung, also hohem elektrischen Widerstand, aus.

Erfindungsgemäß wird dies dadurch erzielt, dass das Zündkerzenwiderstandselement mindestens ein anorganisches amorphes Oxid und mindestens ein erstes anorganisches kristallines Oxid mit einer relativen dielektrischen Permittivität von maximal 15 aufweist. Das anorganische amorphe Oxid bildet dabei eine nicht-kristalline Matrix, in die das erste anorganische kristalline Oxid eingebettet ist. Es liegen also zwei Phasen vor, die mittels Transmissionselektronenmikroskopie (TEM) unterschieden werden können. Es wurde gefunden, dass anorganische kristalline Oxide mit einer relativen dielektrischen Permittivität von maximal 15 und insbesondere von maximal 12, die elektromagnetische Abstrahlung reduzieren und damit die elektromagnetische Verträglichkeit einer Zündkerze verbessern. Die relative dielektrische Permittivität wird dabei gemäß ASTM D2149-13 unter Verwendung von dielektrischer Impedanzspektroskopie gemessen. Je höher dabei der Anteil an erstem anorganischem kristallinem Oxid ist, desto höher ist die elektromagnetische Verträglichkeit des Zündkerzenwiderstandselements.

Ein Zündkerzenwiderstandselement gemäß der Erfindung ist im unabhängigen Anspruch 1 definiert.

Die Unteransprüche zeigen bevorzugte Weiterbildungen der Erfindung.

Gemäß der Erfindung ist das erste anorganische kristalline Oxid ausgewählt aus ZnO, SnO₂ und Mischungen daraus. ZnO und SnO₂ weisen sehr niedrige Werte für die relative dielektrische Permittivität auf, nämlich ZnO: 8 und SnO₂: 12. Damit erzeugt die Verwendung dieser Oxide eine sehr hohe elektromagnetische Verträglichkeit durch reduzierte Freisetzung elektromagnetischer Strahlung. Andere anorganische Oxide, wie beispielsweise Al₂O₃, können zwar ebenfalls eine niedrige relative Permittivität aufweisen, sind jedoch aufgrund der vergleichsweise geringen elektronischen Leitfähigkeit im Vergleich zu ZrO₂, ZnO und SnO₂ weniger stark bevorzugt. Insbesondere Al₂O₃ wird daher vorzugsweise nicht eingesetzt.

Vorteilhaft wird als anorganisches amorphes Oxid ein Glas, insbesondere ein Borsilikatglas, verwendet, da Gläser sehr stabil und dabei elektrisch gut isolierend sind. Sie bilden eine sehr gute Matrix für das erste anorganische amorphe Oxid. Aus vorstehend genannten Gründen ist das Glas vorzugsweise ein Lithium-Borsilikatglas oder ein Lithium-Calcium-Borsilikatglas.

Eine besonders vorteilhafte Zusammensetzung eines Glases (die Mengenangaben beziehen sich auf die Gesamtmasse dieser Zusammensetzung) ist:
SiO₂: 35 bis 65 Masse%,
B₂O₃: 20 bis 55 Masse%,
LiO₂: 0,5 bis 10 Masse%,
Na₂+K₂O: maximal 2 Masse%,
CaO: 0 bis 15 Masse%,
SrO: 0 bis 15 Masse%,
BaO: 0 bis 10 Masse%,
MgO: 0 bis 15 Masse%,
Al₂O₃: 0 bis 15 Masse% und
PbO: 0 bis 5 Masse%.

### Zur Verbesserung des elektrischen Widerstands des

Zündkerzenwiderstandselements ist vorteilhaft ein zweites anorganisches kristallines Oxid enthalten. Das zweite anorganische kristalline Oxid ist dabei wie das erste anorganische kristalline Oxid in die Matrix des anorganischen amorphen Oxids eingebettet. Besonders vorteilhaft ist das zweite anorganische kristalline Oxid ausgewählt aus ZrO₂, TiO₂, HfO₂ und Mischungen daraus.

Ferner vorteilhaft kann das Zündkerzenwiderstandselement mindestens ein anorganisches nicht-oxidisches Material umfassen, wobei das anorganische nicht-oxidische Material insbesondere ausgewählt ist aus Ruß, Graphit, Carbiden, Metallen und Mischungen daraus. Das anorganische nicht-oxidische Material hat eine vergleichsweise hohe elektrische Leitfähigkeit, so dass durch das Mischungsverhältnis von anorganischem kristallinem Oxid zu anorganischem nicht-oxidischem Material der Widerstandswert des Zündkerzenwiderstandselements und damit auch der Widerstandswert der Zündkerze besonders einfach eingestellt werden kann.

Aufgrund der sehr guten Stabilität ist das Carbid vorzugsweise ausgewählt aus Siliciumcarbid, Wolframcarbid, Eisencarbid, Borcarbid, Titancarbid, Zirkoniumcarbid, Hafniumcarbid, Vanadiumcarbid, Niobcarbid, Tantalcarbid, Molybdäncarbid und Mischungen daraus und/oder ist das Metall ausgewählt aus Eisen, Wolfram, Titan, Kupfer, Silber und Mischungen oder Legierungen daraus.

Die elektromagnetische Verträglichkeit des Zündkerzenwiderstandselements bei gleichzeitig hohem elektrischem Widerstand lässt sich gemäß der Erfindung dadurch weiter verbessern, dass der Gesamtgehalt an erstem anorganischem kristallinem Oxid und zweitem anorganischem kristallinem Oxid auf 20 bis weniger als 100 Masse% und insbesondere auf 40 bis 80 Masse%, jeweils bezogen auf die Gesamtmasse des Zündkerzenwiderstandselements eingestellt ist.

Gemäß einer weiteren vorteilhaften Weiterbildung beträgt der Gehalt an anorganischem amorphem Oxid, hier mit "a" bezeichnet, mehr als 0 bis 80 Masse%, insbesondere 10 bis 30 Masse%, jeweils bezogen auf die Gesamtmasse des Zündkerzenwiderstandselements.

Zur Verbesserung der Anpassung des Widerstandswertes des Zündkerzenwiderstandselements beträgt der Gehalt an anorganischem nicht-oxidischem Material, hier mit "n" bezeichnet, vorzugsweise mehr als 0 bis 20 Masse% und insbesondere mehr als 0 bis 10 Masse%, jeweils bezogen auf die Gesamtmasse des Zündkerzenwiderstandselements.

Eine besonders gute, d.h. stabile und elektromagnetisch hoch verträgliche Kombination an anorganischen kristallinen Oxiden ist die Kombination aus ZrO₂, ZnO und SnO₂. Die Massenanteile verteilen sich dabei insbesondere wie folgt auf diese Oxide: x Masse% ZrO₂, y Masse% ZnO und z Masse% SnO₂ mit 0 < x < 0,99*c, 0 < y < c und 0 < z < c, mit c = 20 bis 100 Masse%, insbesondere 40 bis 80 Masse%, jeweils bezogen auf die Gesamtmasse des Zündkerzenwiderstandselements, und x + y + z = c.

Vorzugsweise enthält das Zündkerzenwiderstandselement neben mindestens einem ersten anorganischen kristallinen Oxid, mindestens einem zweiten anorganischen kristallinen Oxid, mindestens einem anorganischen amorphen Oxid und mindestens einem nicht-oxidischen Material keine weiteren Komponenten. Somit gilt: a + c + n = 100.

Ebenfalls erfindungsgemäß wird auch eine Zündkerze beschrieben, die mindestens ein wie vorstehend offenbartes Zündkerzenwiderstandselement umfasst. Aufgrund der hohen elektromagnetischen Verträglichkeit und des dauerhaft stabilen und hohen elektrischen Widerstands des Zündkerzenwiderstandselements, zeichnet sich die erfindungsgemäße Zündkerze durch eine geringe elektromagnetische Abstrahlung aus.

### Kurze Beschreibung der Zeichnung

Nachfolgend werden Ausführungsbeispiele der Erfindung unter Bezugnahme auf die begleitende Zeichnung im Detail beschrieben. In der Zeichnung ist:
- Figur 1: eine teilgeschnittene Ansicht einer Zündkerze gemäß einer ersten Ausführungsform der Erfindung und
- Figur 2: eine schematische Schnittansicht eines Zündkerzenwiderstandselements gemäß einer zweiten Ausführungsform der Erfindung.

### Ausführungsformen der Erfindung

In den Figuren sind nur die wesentlichen Merkmale der Erfindung dargestellt. Alle übrigen Merkmale sind der Übersichtlichkeit halber weggelassen. Ferner beziffern gleiche Bezugszeichen gleiche Bauteile.

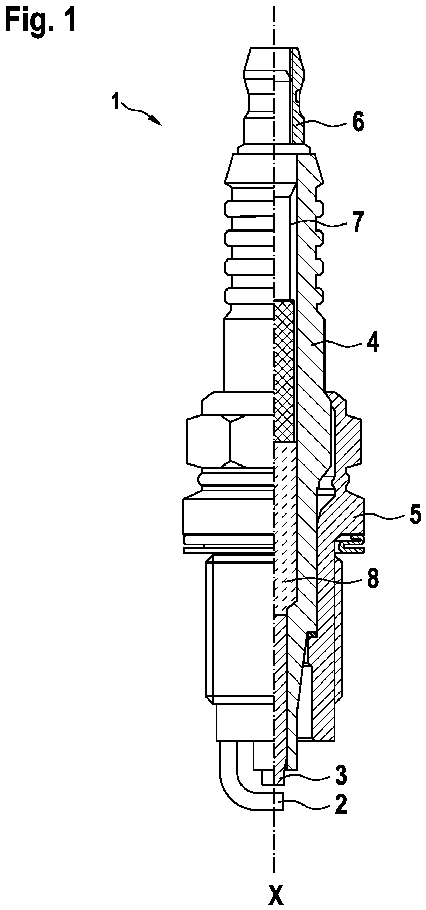

Wie aus Figur 1 ersichtlich ist, umfasst die Zündkerze 1 gemäß einer ersten Ausführungsform eine Masseelektrode 2 und eine Mittelelektrode 3. Ein Isolator 4 ist derart vorgesehen, dass die Mittelelektrode 3 in bekannter Weise etwas vom Isolator 4 vorsteht. Der Isolator 4 selbst ist teilweise von einem Gehäuse 5 umgeben. Das Bezugszeichen 6 bezeichnet eine elektrische Anschlussmutter. Von der elektrischen Anschlussmutter 6 ist eine elektrisch leitfähige Verbindung über einen Anschlussbolzen 7 und ein Zündkerzenwiderstandselement 8 zur Mittelelektrode 3 vorgesehen.

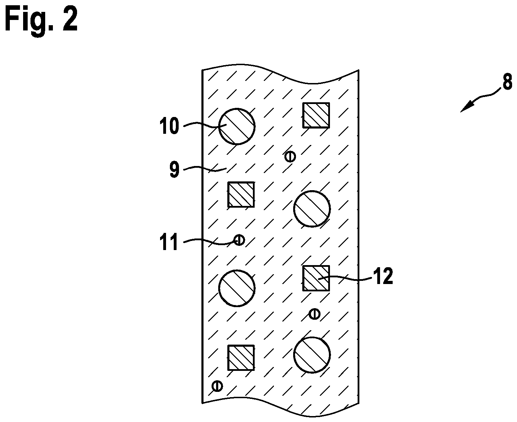

Das Zündkerzenwiderstandselement 8, das in Figur 2 im Detail dargestellt ist, verbessert die elektromagnetische Verträglichkeit der Zündkerze 1 bei gleichbleibend gutem Wert für den elektrischen Widerstand und hoher mechanischer Stabilität. Hierdurch wird auch für die Zündkerze 1 eine niedrige elektromagnetische Abstrahlung erzielt.

Figur 2 ist eine schematische Schnittansicht des Zündkerzenwiderstandselements 8 aus Figur 1. Das Zündkerzenwiderstandselement 8 umfasst mindestens ein anorganisches amorphes Oxid 9 und mindestens ein erstes anorganisches kristallines Oxid 10 mit einer relativen dielektrischen Permittivität von maximal 15. Das anorganische amorphe Oxid 9 bildet dabei eine glasartige Matrix, in die das erste anorganische kristalline Oxid 10 eingebettet ist. Das erste anorganische kristalline Oxid 10 ist insbesondere ZnO oder SnO₂ oder eine Mischung daraus.

Ferner umfasst das Zündkerzenwiderstandselement 8 mindestens ein zweites anorganisches kristallines Oxid 11, wobei das zweite anorganische kristalline Oxid 11 insbesondere ausgewählt ist aus ZrO₂, TiO₂, HfO₂ und Mischungen daraus.

Vorzugsweise ist das erste anorganische kristalline Oxid 10 eine Mischung aus ZnO und SnO₂, das zweite anorganische kristalline Oxid 11 ist ZrO₂ und die Massenanteile des ersten anorganischen kristallinen Oxids 10 und des zweiten anorganischen kristallinen Oxids 11 sind wie folgt: x Masse% ZrO₂, y Masse% ZnO und z Masse% SnO₂ mit 0 < x < 0,99*c, 0 < y < c und 0 < z < c, mit c = 20 bis 100 Masse%, insbesondere 40 bis 80 Masse%, jeweils bezogen auf die Gesamtmasse des Zündkerzenwiderstandselements 8 und x + y + z = c.

Ferner umfasst das Zündkerzenwiderstandselement 8 mindestens ein anorganisches nicht-oxidisches Material 12, wobei das anorganische, nicht-oxidische Material 12 insbesondere ausgewählt ist aus Ruß, Graphit, Carbiden, Metallen und Mischungen daraus. Der Gehalt an anorganischem nicht-oxidischem Material 12 beträgt dabei insbesondere mehr als 0 bis 20 Masse% und insbesondere mehr als 0 bis 10 Masse%, jeweils bezogen auf die Gesamtmasse des Zündkerzenwiderstandselements 8.

Das Zündkerzenwiderstandselement 8 zeichnet sich bei gutem elektrischem Widerstand durch eine sehr hohe elektromagnetische Verträglichkeit aus.

## Patentansprüche

1. Zündkerzenwiderstandselement umfassend mindestens ein anorganisches amorphes Oxid (9) und mindestens ein erstes anorganisches kristallines Oxid (10) mit einer relativen dielektrischen Permittivität von maximal 15, und mindestens ein zweites anorganisches kristallines Oxid (11), wobei das zweite anorganische kristalline Oxid (11), ausgewählt ist aus ZrO₂, TiO₂, HfO₂ und Mischungen daraus, **dadurch gekennzeichnet, dass** der Gesamtgehalt an erstem anorganischem kristallinem Oxid (10) und zweitem anorganischem kristallinem Oxid (11) 20 bis weniger als 100 Masse% jeweils bezogen auf die Gesamtmasse des Zündkerzenwiderstandselements (8) beträgt.

2. Zündkerzenwiderstandselement nach Anspruch 1, wobei das erste anorganische kristalline Oxid (10) ausgewählt ist aus ZnO, SnO₂ und Mischungen daraus.

3. Zündkerzenwiderstandselement nach Anspruch 1 oder 2, wobei das anorganische amorphe Oxid (9) ein Glas, insbesondere ein Borsilikatglas ist.

4. Zündkerzenwiderstandselement nach einem der vorhergehenden Ansprüche, ferner umfassend mindestens ein anorganisches nicht-oxidisches Material (12), wobei das anorganische, nicht-oxidische Material (12) insbesondere ausgewählt ist aus Ruß, Graphit, Carbiden, Metallen und Mischungen daraus.

5. Zündkerzenwiderstandselement nach Anspruch 4, wobei das Carbid ausgewählt ist aus Siliciumcarbid, Wolframcarbid, Eisencarbid, Borcarbid, Titancarbid, Zirkoniumcarbid, Hafniumcarbid, Vanadiumcarbid, Niobcarbid, Tantalcarbid, Molybdäncarbid und Mischungen daraus und/oder wobei das Metall ausgewählt ist aus Eisen, Wolfram, Titan, Kupfer, Silber und Mischungen daraus.

6. Zündkerzenwiderstandselement nach einem der Ansprüche 4 bis 5, wobei der Gesamtgehalt an erstem anorganischem kristallinem Oxid (10) und zweitem anorganischem kristallinem Oxid (11) 40 bis 80 Masse%, jeweils bezogen auf die Gesamtmasse des Zündkerzenwiderstandselements (8) beträgt.

7. Zündkerzenwiderstandselement nach einem der vorhergehenden Ansprüche, wobei der Gehalt an anorganischem amorphem Oxid (9) mehr als 0 bis 80 Masse%, insbesondere 10 bis 30 Masse%, jeweils bezogen auf die Gesamtmasse des Zündkerzenwiderstandselements (8) beträgt.

8. Zündkerzenwiderstandselement nach einem der Ansprüche 4 bis 7, wobei der Gehalt an anorganischem nicht-oxidischem Material (12) mehr als 0 bis 20 Masse%, insbesondere mehr als 0 bis 10 Masse%, jeweils bezogen auf die Gesamtmasse des Zündkerzenwiderstandselements (8) beträgt.

9. Zündkerzenwiderstandselement nach einem der vorhergehenden Ansprüche umfassend x Masse% ZrO₂, y Masse% ZnO und z Masse% SnO₂ mit 0 < x < 0,99*c, 0 < y < c und 0 < z < c, mit c = 20 bis 100 Masse%, insbesondere 40 bis 80 Masse%, jeweils bezogen auf die Gesamtmasse des Zündkerzenwiderstandselements (8) und x + y + z = c.

10. Zündkerze umfassend ein Zündkerzenwiderstandselement (8) nach einem der vorhergehenden Ansprüche.

## Claims

1. Spark plug resistor element comprising at least one inorganic amorphous oxide (9) and at least one first inorganic crystalline oxide (10) having a relative dielectric permittivity of not more than 15, and at least one second inorganic crystalline oxide (11), where the second inorganic crystalline oxide (11) is selected from ZrO₂, TiO₂, HfO₂ and mixtures thereof, **characterized in that** the total content of first inorganic crystalline oxide (10) and second inorganic crystalline oxide (11) is 20% to less than 100% by mass, based in each case on the total mass of the spark plug resistor element (8).

2. Spark plug resistor element according to Claim 1, wherein the first inorganic crystalline oxide (10) is selected from ZnO, SnO₂ and mixtures thereof.

3. Spark plug resistor element according to Claim 1 or 2, wherein the inorganic amorphous oxide (9) is a glass, especially a borosilicate glass.

4. Spark plug resistor element according to any of the preceding claims, further comprising at least one inorganic non-oxidic material (12), where the inorganic non-oxidic material (12) is especially selected from carbon black, graphite, carbides, metals and mixtures thereof.

5. Spark plug resistor element according to Claim 4, wherein the carbide is selected from silicon carbide, tungsten carbide, iron carbide, boron carbide, titanium carbide, zirconium carbide, hafnium carbide, vanadium carbide, niobium carbide, tantalum carbide, molybdenum carbide and mixtures thereof, and/or wherein the metal is selected from iron, tungsten, titanium, copper, silver and mixtures thereof.

6. Spark plug resistor element according to either of Claims 4 and 5, wherein the total content of first inorganic crystalline oxide (10) and second inorganic crystalline oxide (11) is 40% to 80% by mass, based in each case on the total mass of the spark plug resistor element (8).

7. Spark plug resistor element according to any of the preceding claims, wherein the content of inorganic amorphous oxide (9) is more than 0% to 80% by mass, especially 10% to 30% by mass, based in each case on the total mass of the spark plug resistor element (8).

8. Spark plug resistor element according to any of Claims 4 to 7, wherein the content of inorganic non-oxidic material (12) is more than 0% to 20% by mass, especially more than 0% to 10% by mass, based in each case on the total mass of the spark plug resistor element (8).

9. Spark plug resistor element according to any of the preceding claims, comprising x% by mass of ZrO₂, y% by mass of ZnO and z% by mass of SnO₂ with 0 < x < 0.99*c, 0 < y < c and 0 < z < c, with c = 20% to 100% by mass, especially 40% to 80% by mass, based in each case on the total mass of the spark plug resistor element (8), and x + y + z = c.

10. Spark plug comprising a spark plug resistor element (8) according to any of the preceding claims.

## Revendications

1. Élément résistif de bougie d'allumage, comprenant au moins un oxyde amorphe inorganique (9) et au moins un premier oxyde cristallin inorganique (10) ayant une permittivité diélectrique relative d'au plus 15, et au moins un deuxième oxyde cristallin inorganique (11), le deuxième oxyde cristallin inorganique (11) étant choisi parmi ZrO₂, TiO₂, HfO₂ et les mélanges de ceux-ci, **caractérisé en ce que** la teneur totale en premier oxyde cristallin inorganique (10) et en deuxième oxyde cristallin inorganique (11) va de 20 à moins de 100 % en masse par rapport, dans chaque cas, à la masse totale de l'élément résistif (8) de bougie d'allumage.

2. Élément résistif de bougie d'allumage selon la revendication 1, dans lequel le premier oxyde cristallin inorganique (10) est choisi parmi ZnO, SnO₂ et les mélanges de ceux-ci.

3. Élément résistif de bougie d'allumage selon la revendication 1 ou la revendication 2, dans lequel l'oxyde inorganique amorphe (9) est un verre, notamment un verre borosilicaté.

4. Élément résistif de bougie d'allumage selon l'une des revendications précédentes, comprenant en outre au moins un matériau inorganique non-oxyde (12), ledit matériau inorganique non-oxyde (12) étant notamment choisi parmi le noir de carbone, le graphite, les carbures, les métaux et les mélanges de ceux-ci.

5. Élément résistif de bougie d'allumage selon la revendication 4, dans lequel le carbure est choisi parmi le carbure de silicium, le carbure de tungstène, le carbure de fer, le carbure de bore, le carbure de titane, le carbure de zirconium, le carbure d'hafnium, le carbure de vanadium, le carbure de niobium, le carbure de tantale, le carbure de molybdène et les mélanges de ceux-ci et/ou dans lequel le métal est choisi parmi le fer, le tungstène, le titane, le cuivre, l'argent et les mélanges de ceux-ci.

6. Élément résistif de bougie d'allumage selon l'une des revendications 4 à 5, dans lequel la teneur totale en premier oxyde cristallin inorganique (10) et en deuxième oxyde cristallin inorganique (11) va de 40 à 80% en masse par rapport, dans chaque cas, à la masse totale de l'élément résistif (8) de bougie d'allumage.

7. Élément résistif de bougie d'allumage selon l'une des revendications précédentes, dans lequel la teneur en oxyde amorphe inorganique (9) est supérieure à 0 à 80% en masse, en particulier de 10 à 30% en masse par rapport, dans chaque cas, à la masse totale de l'élément résistif (8) de bougie d'allumage.

8. Élément résistif de bougie d'allumage selon l'une des revendications 4 à 7, dans lequel la teneur en matériau inorganique non-oxyde (12) est supérieure à 0 à 20% en masse, notamment supérieure à 0 à 10% en masse par rapport, dans chaque cas, à la masse totale de l'élément résistif (8) de bougie d'allumage.

9. Élément résistif de bougie d'allumage selon l'une des revendications précédentes, comprenant x % en masse de ZrO₂, y % en masse de ZnO et z % en masse de SnO₂, avec 0 < x < 0,99*c, 0 < y < c et 0 < z < c, avec c = 20 à 100 % en masse, en particulier 40 à 80 % en masse, par rapport, dans chaque cas, à la masse totale de l'élément résistif (8) de bougie d'allumage et avec x + y + z = c.

10. Bougie d'allumage comprenant un élément résistif (8) de bougie d'allumage selon l'une des revendications précédentes.
